# EUROPÄISCHE PATENTSCHRIFT

(11) **EP 3 263 948 B1**
(45) Veröffentlichungstag und Bekanntmachung des Hinweises auf die Patenterteilung: **20.02.2019**
(21) Anmeldenummer: 17177035.7
(22) Anmeldetag: 21.06.2017
(51) Int. Cl.: F16G 15/08

(54) **ANSCHLAGWIRBEL BEI DEM DAS GEGENÜBER DEM UNTERTEIL DREHBARE OBERTEIL DURCH EINEN IN EINE LAGERBOHRUNG EINGREIFENDEN LAGERZAPFEN UND LAGERROLLEN FORMSCHLÜSSIG MITEINANDER VERBUNDEN SIND**
ATTACHMENT LOOP IN WHICH THE UPPER PART WHICH CAN BE ROTATED RELATIVE TO THE LOWER PART HAVE A POSITIVE CONNECTION WITH EACH OTHER DUE TO A BEARING PIN WHICH ENTERS A BEARING HOLE AND BEARING ROLLER
TOURILLON DE FIXATION DANS LEQUEL LA PARTIE SUPÉRIEURE ÉTANT PIVOTANTE PAR RAPPORT À LA PARTIE INFÉRIEURE PAR UN AXE DE SUPPORT EN PRISE DANS UN ALÉSAGE DE SUPPORT ET GALETS DE ROULEMENTS RELIÉS ENSEMBLE PAR COMPLÉMENTARITÉ DE FORME

(30) Priorität: 28.06.2016 DE 202016004078 U
(43) Veröffentlichungstag der Anmeldung: 03.01.2018
(73) Patentinhaber: J.D. Theile GmbH & Co. KG, 58239 Schwerte (DE)
(72) Erfinder: REDDER, Manfred, 59379 Seln-Bork (DE)
(74) Vertreter: Haverkamp, Jens

(56) Entgegenhaltungen:
- EP-A1- 0 004 830
- DE-C- 856 082
- DE-C- 882 606
- DE-U1-202012 100 764
- DE-U1-202016 006 871

## Beschreibung

Die Erfindung betrifft einen Anschlagwirbel, umfassend ein Unterteil zum Anschließen des Anschlagwirbels an einen zu hebenden oder festzulegenden Gegenstand sowie ein drehbar gegenüber dem Unterteil angeordnetes Oberteil zum Anschließen von Anschlag- oder Zurrmitteln, wobei das Oberteil und das Unterteil durch einen in eine Lagerbohrung eingreifenden Lagerzapfen und einen oder mehrere Sicherungsmittel formschlüssig miteinander verbunden sind, wobei die Sicherungsmittel als Lagerrollen ausgebildet sind, wobei die Lagerrollen als Kegelrollen ausgebildet sind.

Anschlagwirbel werden zum Heben oder Festlegen von Gegenständen, wie z.B. Maschinen oder Maschinebauteilen, verwendet. Zu diesem Zweck verfügt ein solcher Anschlagwirbel über Mittel zum Anbringen desselben an einen zu hebenden oder festzulegenden Gegenstand sowie über eine Aufnahme, etwa eine Öse oder einen Gabelkopf, in die typischerweise eine nach Art eines Kettengliedes ausgebildete Hakenöse zum Anschließen von Anschlag- oder Zurrmitteln eingehängt ist. Zum Anschließen des Anschlagwirbels an den zu hebenden oder festzulegenden Gegenstand wird dieser entweder an dem Gegenstand durch eine Fügeverbindung angeschlossen oder dieser verfügt beispielsweise über einen von seiner unteren Seite abragenden Gewindezapfen oder eine Gewindebohrung.

Ein solcher Anschlagwirbel ist beispielsweise aus DE 84 06 130 U1 bekannt. Er umfasst ein an dem zu hebenden oder festzulegenden Gegenstand anschließbares Unterteil, von dessen Unterseite beispielsweise der Gewindezapfen abragt, und ein drehbar gegenüber dem Unterteil angeordnetes Oberteil, das die Aufnahme, beispielsweise eine Öse und die in die Aufnahme eigehängte Hakenöse trägt.

Zum drehbaren Anschließen des Oberteils des Anschlagwirbels an das Unterteil verfügt das Oberteil des in DE 84 06 130 U1 beschriebenen Anschlagwirbels über einen Lagerzapfen, der zu seiner Lagerung in eine entsprechend ausgebildete Lagerbohrung des Unterteils eingreift. Zum formschlüssigen Verbinden dieser beiden Elemente miteinander unter gleichzeitiger Gewährleistung einer leichten Drehbarkeit des Oberteils gegenüber dem Unterteil ist in dem Lagerzapfen des Oberteils eine Umfangsnut mit halbkreisförmigem Querschnitt eingebracht. In diese umlaufende Nut greifen gemäß DE 84 06 130 U1 zwei Stifte nach Art eines Splintes als Sicherungsmittel ein.

In einer Weiterbildung dieses aus dem vorgenannten Dokument bekannten Anschlagwirbels weist die Innere Mantelfläche der Lagerbohrung eine der Umfangsnut des Lagerzapfens entsprechende umlaufende Nut auf. Beide zueinander weisenden offene Nuten sind so zueinander positioniert, dass sich diese zu einem Kanal oder Tunnel mit einer kreisförmigen Querschnittfläche ergänzen. Als Sicherungsmittel und zum Unterstützen der Leichtgängigkeit der Drehbewegung des Oberteils gegenüber dem Unterteil sind in diesem, durch die beiden zueinander weisenden offenen Nuten gebildeten Kanal, Kugeln angebracht, so dass das Oberteil kugelgelagert gegenüber dem Unterteil drehbar ist. Eine auf das Unterteil wirkende Zugbelastung wird über die Kugeln des Lagers von dem Oberteil auf das Unterteil und umgekehrt übertragen.

Typischerweise wird zum Verbinden des Oberteils mit dem Unterteil ein Kugellager, wie zuvor beschrieben, eingesetzt. Zwischen der äußeren Mantelfläche des Lagerzapfens und der inneren Mantelfläche der Lagerbohrung ist ein für die geforderte leichtgängige Drehbarkeit notwendiges Spiel vorgesehen. Eine Belastung an den jeweiligen Nutkanten des Oberteiles und des Unterteils durch die Kugeln ist somit nicht vermeidbar und stellt sich insbesondere dann ein, wenn im Zuge eines Verschleißes das Spiel im Bereich des Kugellagers vergrößert wird. Die geringe Kontaktfläche zwischen Kugeln und Nutkanten führen zu einer erhöhten Flächenpressung, was wiederum zu einem erhöhten Verschleiß in den Nuten und den Kugeln führt. Bei Zugbelastung zwischen Oberteil und Unterteil des Anschlagwirbels werden die Kugeln auf Abscheren belastet, was wiederum besonders bei statischer Zugbelastung zu Einkerbungen in den Kugellaufbahnen und zur Zerstörung der Kugeln führt. Die leichtgängige Drehbarkeit zwischen Oberteil und Unterteil des Anschlagwirbels unter Last wird hierdurch stark beeinträchtigt.

Weitere Anschlagwirbel gattungsgemäßer Art sind aus der DE 882606 und DE 856082 bekannt.

Ausgehend von diesem diskutierten Stand der Technik liegt der Erfindung daher die Aufgabe zugrunde, einen eingangs genannten, gattungsgemäßen Anschlagwirbel dergestalt auszubilden, dass ohne Einbuße an die Nennbelastbarkeit des Anschlagwirbels und ohne die Bauhöhe und den Außendurchmesser des Grundkörpers unnötig erhöhen zu müssen, die Belastung in dem Lager deutlich verringert ist und der Verschleiß minimiert wird.

Zur Lösung dieser Aufgabe schlägt die Erfindung vor, dass der Lagerzapfen eine kreisrunde Querschnittsfläche aufweist und konisch mit nach unten zum Boden des Unterteils zunehmendem Durchmesser ausgebildet ist, wobei die äußere Mantelfläche des Lagerzapfens als innere Lauffläche der Lagerrollen dient und die Lagerbohrung des Unterteils ebenfalls konisch ausgebildet ist, mit nach oben zur Öse hin kleiner werdendem Durchmesser, wobei die Mantelfläche der Lagerbohrung des Unterteils als äußere Lauffläche der Lagerrollen dient, wobei der Winkel zwischen Lagerrolle und Längsachse 10° bis 30° beträgt.

Vorteilhafte Weiterbildungen der Erfindung sind in den Unteransprüchen beschrieben.

Gemäß einem Ausführungsbeispiel sind die Rollen als Kegelrollen ausgebildet. Der Lagerzapfen des Oberteils dient hier als Lagerinnenring während die Lagerbohrung des Unterteils als Lageraußenring ausgeführt ist. Der Winkel zwischen Rollenachse und Längsachse des Anschlagwirbels ist so gewählt, dass sowohl bei Zugbelastung als auch bei Querbelastung des Oberteils des Anschlagwirbels die Rollen immer auf Druck beansprucht werden. Das Einsetzen von Kegelrollen als Lager hat zur Folge, dass die Kontaktfläche zwischen Kegelrollen und Lagerzapfen bzw. Lagerbohrung gleichbleibend die gesamte Rollenlänge ist, unabhängig vom Verschleißzustand von Lagerzapfen oder Lagerbohrung.

Gemäß einer weiteren Ausgestaltung des Anschlagwirbels wird die Öffnung für die Montage der Lagerrollen im Boden des Unterteils des Anschlagwirbels eingebracht. Die Öffnung wird durch einen Stopfen verschlossen, der durch einen Querstift gesichert wird. Die Positionierung der Montageöffnung im Boden des Unterteils hat zum Vorteil, dass der Stopfen, nach dem Anschließen des Anschlagwirbels an den zu hebenden oder festzulegenden Gegenstand, auch unter Belastung nicht aus der Öffnung gedrückt oder entfernt werden kann. Ein versehentliches Lösen des Stopfens und damit das ev. Herausfallen einer oder mehrerer Lagerrollen aus dem Unterteil ist somit ausgeschlossen, was die Einsatzsicherheit des Anschlagwirbels wesentlich erhöht.

Gemäß einer weiteren Ausgestaltung des Anschlagwirbels ist im Unterteil des Anschlagwirbels eine Gewindebohrung mit Zugang zum Lager vorgesehen. Die Gewindebohrung dient zur Aufnahme eines Schmiernippels durch das das Lager mit Schmiermittel versorgt werden kann. Zur Abdichtung des Lagers ist zwischen Oberteil und Unterteil des Anschlagwirbels ein Dichtring vorgesehen.

Nachfolgend ist die Erfindung anhand eines Ausführungsbeispiels unter Bezugnahme auf die beigefügten Figuren beschrieben.

Es zeigen:
- Fig. 1:: eine schematisierte teils geschnittene Ansicht des Anschlagwirbels
- Fig. 2:: eine vergrößerte Darstellung des Dichtungsbereiches des Anschlagwirbels der Fig. 1
- Fig. 3:: Dichtungsbereich des Anschlagwirbels der Fig. 1 bei max. zulässigem Verschleiß.

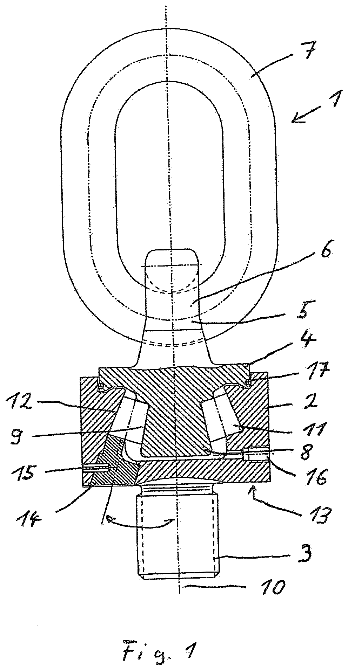

Fig. 1 zeigt einen Anschlagwirbel 1 mit einem Unterteil 2 an dessen Unterseite ein Gewindezapfen 3 angeordnet ist. Der Gewindezapfen 3 dient zum Anschließen des Anschlagwirbels 1 an einen zu hebenden oder festzulegenden Gegenstand. Drehbar um die Längsachse des Anschlagwirbels 1 ist in dem Unterteil 2 ein Oberteil 4 gelagert. Teil des Oberteiles 4 ist eine Öse 5 mit einer Öffnung 6. In der Öffnung 6 der Öse ist eine Hakenöse 7 eingesetzt. Die Hakenöse 7 dient zum Anschließen eines Anschlag- oder Zurrmittels.

Zum drehbaren Anschließen des Oberteils 4 an das Unterteil 2 verfügt dieses über einen Lagerzapfen 8, der axial von der Öse 5 nach unten zum Unterteil 2 hin abragend angeordnet ist. Der Lagerzapfen 8 weist eine kreisrunde Querschnittsfläche auf und ist konisch, nach unten mit zunehmendem Durchmesser, ausgebildet. Die äußere Mantelfläche 9 des Lagerzapfens 8 dient als innere Lauffläche der Lagerrollen 11. Die Lagerbohrung des Unterteils 2 ist ebenfalls konisch ausgebildet, nach oben mit kleiner werdendem Durchmesser. Die Mantelfläche 12 der Lagerbohrung des Unterteils 2 dient als äußere Lauffläche der Lagerrollen 11.

Als Sicherungsmittel und zum Unterstützen der Leichtgängigkeit der Drehbewegung des Oberteils 4 gegenüber dem Unterteil 2 werden durch eine Bohrung im Boden 13 des Unterteils 2 Lagerrollen 11 eingebracht. Die Bohrung im Boden 13 des Unterteils 2 wird durch einen Stopfen 14 geschlossen, der durch einen Stift 15 gesichert wird.

Werden Anschlagwirbel aggressiven Medien oder Salzwasser ausgesetzt, ist ein Nachschmieren des Lagers unumgänglich. Zu diesem Zweck ist in dem Unterteil 2 des Anschlagwirbels 1 eine Schmierbohrung 16 vorgesehen. Die Schmierbohrung 16 kann mit einer hier nicht dargestellten Verschlussschraube oder einem Schmiernippel geschlossen werden.

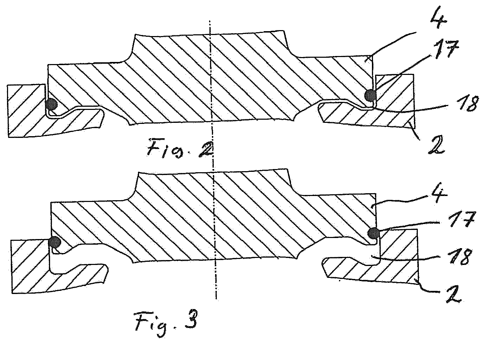

Zur Abdichtung des Lagers ist zwischen Oberteil 4 und Unterteil 2 ein Dichtring 17 vorgesehen. In Fig. 2 ist die Anordnung in einem vergrößerten Ausschnitt dargestellt. Der Spalt 18 zwischen Oberteil 4 und Unterteil 2 vergrößert sich mit zunehmendem Verschleiß im Rollenlager, wie in Fig. 3 dargestellt. Ist der max. zulässige Verschleiß im Rollenlager erreicht, liegt der Dichtring 17 nicht mehr mit seiner vollen Dicke in der Bohrung des Unterteils 2, sondern tritt sichtbar nach außen. Der Verschleißzustand des Lagers kann also von außen ohne weitere Hilfsmittel erkannt und beurteilt werden.

### Bezugszeichenliste

- 1: Anschlagwirbel
- 2: Unterteil
- 3: Gewindezapfen
- 4: Oberteil
- 5: Öse
- 6: Öffnung
- 7: Hakenöse
- 8: Lagerzapfen
- 9: Mantelfläche Lagerzapfen
- 10: Längsachse
- 11: Lagerrolle
- 12: Mantelfläche Unterteil
- 13: Boden Unterteil
- 14: Stopfen
- 15: Sicherungsstift
- 16: Schmierbohrung
- 17: Dichtring
- 18: Spalt zwischen Oberteil und Unterteil

## Patentansprüche

1. Anschlagwirbel (1), umfassend ein Unterteil (2) zum Anschließen des Anschlagwirbels an einen zu hebenden oder festzulegenden Gegenstand sowie ein drehbar gegenüber dem Unterteil (2) angeordnetes Oberteil (4) zum Anschließen von Anschlag- oder Zurrmitteln, wobei das Oberteil (4) und das Unterteil (2) durch einen in eine Lagerbohrung eingreifenden Lagerzapfen (8) und einen oder mehrere Sicherungsmittel formschlüssig miteinander verbunden sind, wobei die Sicherungsmittel als Lagerrollen (11) ausgebildet sind, wobei die Lagerrollen (11) als Kegelrollen ausgebildet sind, **dadurch gekennzeichnet, dass** der Lagerzapfen (8) eine kreisrunde Querschnittsfläche aufweist und konisch mit nach unten zum Boden (13) des Unterteils zunehmendem Durchmesser ausgebildet ist, wobei die äußere Mantelfläche (9) des Lagerzapfens (8) als innere Lauffläche der Lagerrollen (11) dient und die Lagerbohrung des Unterteils (2) ebenfalls konisch ausgebildet ist, mit nach oben zur Öse (5) hin kleiner werdendem Durchmesser, wobei die Mantelfläche (12) der Lagerbohrung des Unterteils (2) als äußere Lauffläche der Lagerrollen (11) dient, wobei die Lagerrollen (11) in einem Winkel zur Längsachse (10) angeordnet sind, wobei der Winkel zwischen Lagerrolle (11) und Längsachse (10) 10⁰ bis 30⁰ beträgt.

2. Anschlagwirbel nach Anspruch 1, **dadurch gekennzeichnet, dass** die Mantelfläche (9) des Lagerzapfens (8) als innere Lauffläche für die Lagerrollen (11) dient.

3. Anschlagwirbel nach einem der Ansprüche 1 bis 2 **dadurch gekennzeichnet, dass** die Mantelfläche (12) des Unterteils (2) als äußere Lauffläche für die Lagerrollen (11) dient.

4. Anschlagwirbel nach einem der Ansprüche 1 bis 3 **dadurch gekennzeichnet, dass** eine Bohrung im Boden (13) des Unterteils (2) für die Montage der Lagerrollen (11) vorgesehen ist.

5. Anschlagwirbel nach Anspruch 4 **dadurch gekennzeichnet, dass** die Bohrung im Bodenunterteil durch einen Stopfen (14) verschlossen wird.

6. Anschlagwirbel nach Anspruch 5 **dadurch gekennzeichnet, dass** der Stopfen (14) durch einen Splint (15) gesichert wird.

7. Anschlagwirbel nach einem der Ansprüche 5 oder 6 **dadurch gekennzeichnet, dass** der Stopfen (14) eingeklebt oder eingepresst ist.

8. Anschlagwirbel nach einem der Ansprüche 1 bis 7 **dadurch gekennzeichnet, dass** im Unterteil (2) eine oder mehrere Gewindebohrungen (16) vorgesehen sind, durch die dem Rollenlager im Bedarfsfall Schmiermittel zugefügt werden kann.

9. Anschlagwirbel nach Anspruch 8 **dadurch gekennzeichnet, dass** die Schmierbohrung (16) durch eine hier nicht dargestellte Verschlussschraube oder Schmiernippel verschlossen wird.

10. Anschlagwirbel nach einem der Ansprüche 1 bis 9 **dadurch gekennzeichnet, dass** der Ringspalt zwischen Oberteil (4) und Unterteil (2) durch einen Dichtring (17) abgedichtet ist.

11. Anschlagwirbel nach Anspruch 10 **dadurch gekennzeichnet, dass** der Dichtring (17) so im Oberteil (4) positioniert ist, dass bei max. zulässigem Spalt (18) der Dichtring (17) nicht mehr durch die Bohrung im Gehäuse (2) überdeckt wird.

12. Anschlagwirbel nach einem der Ansprüche 10 oder 11 **dadurch gekennzeichnet, dass** der Dichtring (17) im Oberteil (4) mit einer Signalfarbe versehen ist.

## Claims

1. An attachment loop (1), comprising a lower part (2) for connecting the attachment loop to an object to be lifted or fixed and an upper part (4) which can be rotated relative to the lower part (2) for connecting attachment or load securing means, the upper part (4) and the lower part (2) having a positive connection with each other due to a bearing pin which enters a bearing hole (8) and due to one or more securing means, the securing means being configured as bearing rollers (11), the bearing rollers (11) being configured as tapered rollers, **characterized by that** the bearing pin (8) has a circular cross-sectional area and is conical, with its diameter increasing downwards to the bottom (13) of the lower part, the outer shell surface (9) of the bearing pin (8) serving as an inner raceway of the bearing rollers (11), and the bearing hole of the lower part (2) also being conical, with its diameter decreasing upwards to the eyelet (5), the shell surface (12) of the bearing hole of the lower part (2) serving as an outer raceway of the bearing rollers (11), the bearing rollers (11) being disposed at an angle relative to the longitudinal axis (10), the angle between bearing roller (11) and longitudinal axis (10) being 10° to 30°.

2. The attachment loop of claim 1, **characterized by that** the shell surface (9) of the bearing pin (8) serves as an inner raceway for the bearing rollers (11).

3. The attachment loop of one of claims 1 to 2, **characterized by that** the shell surface (12) of the lower part (2) serves as an outer raceway for the bearing rollers (11).

4. The attachment loop of one of claims 1 to 3, **characterized by that** a through-hole is provided in the bottom (13) of the lower part (2) for mounting the bearing rollers (11).

5. The attachment loop of claim 4, **characterized by that** the through-hole in the bottom lower part is closed by a plug (14).

6. The attachment loop of claim 5, **characterized by that** the plug (14) is secured by a pin (15).

7. The attachment loop of one of claims 5 or 6, **characterized by that** the plug (14) is glued-in or pressed-in.

8. The attachment loop of one of claims 1 to 7, **characterized by that** in the lower part (2) one or more threaded holes (16) are provided, through which a lubricant can be supplied to the roller bearing if needed.

9. The attachment loop of claim 8, **characterized by that** the lubrication hole (16) is closed by a closure screw or a lubrication nipple not shown here.

10. The attachment loop of one of claims 1 to 9, **characterized by that** the annular gap between upper part (4) and lower part (2) is sealed by a sealing ring (17).

11. The attachment loop of claim 10, **characterized by that** the sealing ring (17) is positioned in the upper part (4) such that with max. allowable gap (18), the sealing ring (17) is not covered anymore by the through-hole in the housing (2).

12. The attachment loop of one of claims 10 or 11, **characterized by that** the sealing ring (17) in the upper part (4) is provided with a signal color.

## Revendications

1. Tourillon de fixation (1), comprenant une partie inférieure (2) pour relier le tourillon de fixation à un objet à être soulevé ou fixé et une partie supérieure (4) qui peut être montée rotative par rapport à la partie inférieure (2) pour relier des moyens de fixation ou moyens tendeurs, la partie supérieure (4) et la partie inférieure (2) étant reliées ensemble par complémentarité de forme par un axe de support de prise dans un alésage de support (8) et un ou plusieurs moyens tendeurs, les moyens tendeurs étant configurés comme des galets de roulement (11), les galets de roulement (11) étant configurés comme des rouleaux coniques, **caractérisé en ce que** l'axe de support (8) a une section circulaire et est conique, avec son diamètre s'augmentant en bas vers le fond (13) de la partie inférieure, la surface latérale extérieure (9) de l'axe de support (8) servant de surface de roulement intérieure des galets de roulement (11), et l'alésage de support de la partie inférieure (2) aussi étant conique, avec son diamètre décroissant en haut vers l'oeillet (5), la surface latérale (12) de l'alésage de support de la partie inférieure (2) servant de surface de roulement extérieure des galets de roulement (11), les galets de roulement (11) étant disposés à un angle par rapport à l'axe longitudinal (10), l'angle entre le galet de roulement (11) et l'axe longitudinal (10) étant de 10° à 30°.

2. Tourillon de fixation selon la revendication 1, **caractérisé en ce que** la surface latérale (9) de l'axe de support (8) sert de surface de roulement intérieure pour les galets de roulement (11).

3. Tourillon de fixation selon une des revendications 1 à 2, **caractérisé en ce que** la surface latérale (12) de la partie inférieure (2) sert de surface de roulement extérieure pour les galets de roulement (11).

4. Tourillon de fixation selon une des revendications 1 à 3, **caractérisé en ce qu'**un alésage est prévu dans le fond (13) de la partie inférieure (2) pour monter les galets de roulement (11).

5. Tourillon de fixation selon la revendication 4, **caractérisé en ce que** l'alésage dans la partie inférieure du fond est fermé par un bouchon (14).

6. Tourillon de fixation selon la revendication 5, **caractérisé en ce que** le bouchon (14) est assuré par une goupille (15).

7. Tourillon de fixation selon une des revendications 5 ou 6, **caractérisé en ce que** le bouchon (14) est collé ou emmanché.

8. Tourillon de fixation selon une des revendications 1 à 7, **caractérisé en ce que** dans la partie inférieure (2) un ou plusieurs trous taraudés (16) sont prévus, à travers lesquels un lubrifiant peut être ajouté à la butée à rouleaux si nécessaire.

9. Tourillon de fixation selon la revendication 8, **caractérisé en ce que** le trou de lubrification (16) est fermé par une vis de fermeture ou un graisseur non montré ici.

10. Tourillon de fixation selon une des revendications 1 à 9, **caractérisé en ce que** la fente annulaire entre la partie supérieure (4) et la partie inférieure (2) est étanchéifiée par un joint d'étanchéité (17).

11. Tourillon de fixation selon la revendication 10, **caractérisé en ce que** le joint d'étanchéité (17) est positionné dans la partie supérieure (4) de façon qu'avec la fente maximale autorisée (18), le joint d'étanchéité (17) ne soit plus recouvert par l'alésage dans le boîtier (2).

12. Tourillon de fixation selon une des revendications 10 ou 11, **caractérisé en ce que** le joint d'étanchéité (17) dans la partie supérieure (4) est pourvu d'une couleur voyante.
